(19) Europäisches Patentamt
European Patent Office
Office européen des brevets

(11) **EP 1 538 686 B1**

(12) **EUROPEAN PATENT SPECIFICATION**

(45) Date of publication and mention
of the grant of the patent:
**15.06.2011 Bulletin 2011/24**

(21) Application number: **03792777.9**

(22) Date of filing: **21.08.2003**

(51) Int Cl.:
*H01M 2/16* (2006.01)     *H01M 10/052* (2010.01)
*H01M 10/44* (2006.01)

(86) International application number:
**PCT/JP2003/010585**

(87) International publication number:
**WO 2004/019433 (04.03.2004 Gazette 2004/10)**

(54) **NON-AQUEOUS SECONDARY BATTERY AND SEPARATOR USED THEREFOR**

WASSERFREIE SEKUNDÄRBATTERIE UND TRENNGLIED DAFÜR

ACCUMULATEUR NON AQUEUX ET SEPARATEUR UTILISE AVEC CE DERNIER

(84) Designated Contracting States:
**AT BE BG CH CY CZ DE DK EE ES FI FR GB GR
HU IE IT LI LU MC NL PT RO SE SI SK TR**

(30) Priority: **22.08.2002   JP 2002241905
13.03.2003   JP 2003067841**

(43) Date of publication of application:
**08.06.2005   Bulletin 2005/23**

(73) Proprietor: **TEIJIN LIMITED
Osaka-shi,
Osaka 541-0054 (JP)**

(72) Inventors:
• **NISHIKAWA, Satoshi,
C/O Teijin Limited
Iwakuni-shi, Yamaguchi 740-0014 (JP)**
• **HONMOTO, Hiroyuki,
C/O Teijin Limited
Iwakuni-shi, Yamaguchi 740-0014 (JP)**
• **DAIDO, Takahiro,
C/O Teijin Limited
Iwakuni-shi, Yamaguchi 740-0014 (JP)**

(74) Representative: **Hallybone, Huw George et al
Carpmaels & Ransford
One Southampton Row
London
WC1B 5HA (GB)**

(56) References cited:
**EP-A- 1 137 092         EP-A- 1 191 622
EP-A1- 1 009 056      WO-A1-01/67536
JP-A- 2001 222 988    JP-A- 2001 266 942
JP-A- 2001 332 307    JP-A- 2002 042 867
JP-A- 2003 007 279**

• **J.POWER SOURCES, vol. 90, 2000, pages 39-44,
XP002451429**
• **CHEMICAL REVIEWS, vol. 104, no. 10, 2004,
pages 4424-4442, XP002451430**

Remarks:
The file contains technical information submitted after
the application was filed and not included in this
specification

**Description**

Technical Field

The present invention relates to a non-aqueous secondary battery, which produces electromotive force by doping/dedoping of lithium, and to a separator for use therein. In particular, it relates to a battery which ensures safety during periods of overcharging.

Background Art

Non-aqueous secondary batteries, which produce an electromotive force by lithium doping/dedoping, are characterized by having high energy density compared to other types of secondary batteries. Such characteristics meet the demands for lighter weight and miniaturization of portable electronic devices, and such non-aqueous secondary batteries are therefore widely used as power sources for such portable electronic devices as cellular phones and laptop computers.

Common non-aqueous secondary batteries currently employ lithium cobaltate for the positive electrode active material and a carbon material as the negative electrode active material, but research and development is being actively pursued toward achieving even higher performance with such non-aqueous secondary batteries.

One aspect of high performance is increased energy density. One approach that has been studied is the use of lithium nickelate instead of lithium cobaltate as the positive electrode active material. For the negative electrode, silicon-based compounds, tin-based compounds and nitrides have been the focus of research as active substances instead of carbon materials. A technique has been proposed in WO01/22519, and other publications, for exploiting, at the negative electrode, the capacity component from deposition and dissolution of lithium, in addition to the capacity component due to lithium doping/dedoping according to the conventional viewpoint. The major issue in achieving high energy density is to also ensure safety, but at the current time it is difficult to ensure safety especially during periods of overcharge.

An essential aspect of high performance is improved safety. A variety of technologies have been proposed for improving safety, and one approach has been to look into the use of lithium manganate for the positive electrode active material. Lithium manganate has lower heat release during decomposition by deoxygenation compared to lithium cobaltate, and is therefore an advantageous positive electrode material in terms of ensuring safety. However, since virtually all of the lithium in the positive electrode active material is used during charge-discharge, the amount of lithium stored in the positive electrode active material during full charge is smaller, and therefore the material is disadvantageous for ensuring safety during periods of overcharge by the technique described in WO01/67536. Consequently, ensuring safety during periods of overcharge has been a serious issue.

Current non-aqueous secondary batteries employ polyolefin fine porous films with a shutdown function as separators. The shutdown function also effectively works in a comparatively mild non-aqueous secondary battery safety test for external shorts and the like, and can thus contribute to ensuring safety of non-aqueous secondary batteries. However, it is not always effective for ensuring safety during periods of overcharge.

Protective circuits are currently employed in non-aqueous secondary batteries to ensure safety during overcharge. Electronic circuits acting as protective circuits are expected to undergo breakage and are therefore essentially unsafe, and this is currently one of the major obstacles against achieving high performance in non-aqueous secondary batteries.

The present inventors have proposed, in WO01/67536, a new overcharge-preventing function and a separator which performs the function. Overcharge is prevented using a metal lithium species which is deposited on the negative electrode surface during periods of overcharge. A similar invention is also described in Japanese Unexamined Patent Publication No. 2002-42867.

The overcharge-preventing function described in WO01/67536 and discovered by the present inventors markedly increases the safety of non-aqueous secondary batteries during periods of overcharge, and employing the function can significantly reduce dependence on protective circuits. However, it has become difficult to apply the overcharge-preventing function discovered by the present inventors, in a simple manner, given the climate of increasing the performance of non-aqueous secondary batteries.

Since approximately half of the lithium in the lithium cobaltate is used for charge-discharge in current non-aqueous secondary batteries employing lithium cobaltate in the positive electrode, about half of the lithium remains in the lithium cobaltate even during full charge. During periods of overcharge, this lithium is released and deposited on the negative electrode surface, and the overcharge-preventing function described in WO01/67536 is based on the principle of preventing overcharge using the deposited metal lithium. Consequently, a sufficient amount of metal lithium must be deposited in order to realize the overcharge-preventing function.

With lithium nickelate or lithium manganate recently proposed as positive electrodes, the proportion of lithium in the lithium present which can be used for charge-discharge is greater compared to using the cobaltate and, therefore, the proportion of lithium remaining in the positive electrode during periods of full charge, which can contribute to the overcharge-preventing function, is smaller. Thus, when lithium nickelate or lithium manganate is used for the positive electrode it has been more difficult, to effectively exhibit the overcharge-preventing function, than when lithium cobaltate is used.

Also, in the case of a non-aqueous battery wherein the capacity component due to deposition and dissolution of lithium at the negative electrode, in addition to the capacity component due to lithium doping/dedoping, is exploited for charge-discharge as described in WO01/22519, a different problem arises when it is attempted to exhibit an overcharge-preventing function. As the overcharge-preventing function is based on the principle of preventing overcharge by using lithium metal which is deposited at the negative electrode, the overcharge-preventing function is exhibited before a full charge can occur in this type of battery, and it thus becomes impossible to accomplish charging as designed (this will hereinafter be referred to as an "insufficient charge phenomenon").

Japanese Unexamined Patent Publication No. 2002-42867 discloses application of the overcharge-preventing function to the battery described in WO01/22519. However, the separator disclosed in Japanese Unexamined Patent Publication No. 2002-42867 is a nonwoven fabric retaining polyvinylidene fluoride (PVdF), and the polyvinylidene fluoride layer is not porous but rather has a dense structure. With this type of separator it is difficult to obtain sufficient rate properties, and it is therefore impractical. The rate properties can be improved by a smaller thickness, but since the PVdF layer itself does not have adequate ion conductivity, the current concentration effect of the nonwoven fabric increases, thereby leading to a notable insufficient charge phenomenon. Consequently, with a separator having this kind of structure it is extremely difficult to achieve both practical rate properties and an overcharge-preventing function while avoiding the insufficient charge phenomenon.

Disclosure of Invention

It is therefore an object of the present invention to provide a construction for a non-aqueous secondary battery such as a battery using lithium nickelate or lithium manganate in the positive electrode or a battery which also exploits the capacity component due to deposition and dissolution of lithium at the negative electrode, wherein an overcharge-preventing function can be effectively exhibited even while higher performance is achieved.

In order to achieve the object stated above, the invention provides a non-aqueous secondary battery which employs a negative electrode in which the negative electrode active material is a material capable of lithium doping/ dedoping, a positive electrode in which the positive electrode active material is a lithium-containing transition metal oxide, and a non-aqueous electrolyte solution as the electrolyte solution, wherein

(1) the battery includes a separator having an overcharge preventing function, wherein said separator is composed of a porous film made of an organic polymer, which includes a network-like support, and swells in the electrolyte solution and retains the electrolyte solution,

(2) the network-like support has a mean film thickness of 10-30 $\mu$m, a basis weight of 6-20 g/m$^2$, a Gurley value (JIS P8117) of no greater than 10 sec/100 cc, a McMullin number of no greater than 10 at 25°C and a (McMullin number x film thickness) product of no greater than 200 $\mu$m.

(3) the separator has a mean film thickness of 10-35 $\mu$m, a basis weight of 10-25 g/m$^2$ and a Gurley value (JIS P8117) of no greater than 60 sec/100 cc, and

(4) said battery satisfies the following relationships I and II:

$$Q_{pr}W_p < q_m + Q_nW_n < 1.3 Q_pW_p \qquad \text{I}$$

$$Q_pW_p < q_m + Q_nW_n < 1.3 Q_pW_p \qquad \text{II}$$

wherein the value of the total amount of lithium in the positive electrode active material in terms of electric charge is $Q_p$ (mAh/mg), the amount of lithium utilized for charge-discharge reaction of the lithium in the positive electrode active material in terms of electric charge is $Q_{pr}$ (mAh/mg), the value of the amount of lithium which can be doped in the negative electrode active material in terms of electric charge is $Q_n$ (mAh/mg), the value for the overcharge-preventing function of the separator is $q_m$ (mAh/cm$^2$), the weight of the positive electrode active material is $W_p$ (mg/cm$^2$) and the weight of the negative electrode active material is $W_n$ (mg/cm$^2$).

In other words, the present invention comprises, for example, the following aspects.

EP 1 538 686 B1

1. A non-aqueous secondary battery which employs a negative electrode in which the negative electrode active material is a material capable of lithium doping/dedoping, a positive electrode in which the positive electrode active material is a lithium-containing transition metal oxide, and a non-aqueous electrolyte solution as the electrolyte solution, wherein

(1) the battery includes a separator having an overcharge-preventing function, wherein said separator is composed of a porous film made of a porous polymer, which includes a network-like support, and swells in the electrolyte solution and retains the electrolyte solution,
(2) the network-like support has a mean film thickness of 10-30 $\mu$m, a basis weight of 6-20 g/m$^2$, a Gurley value (JIS P8117) of no greater than 10 sec/100 cc, a McMullin number of no greater than 10 at 25°C and a (McMullin number x film thickness) product of no greater than 200 $\mu$m.
(3) the separator has a mean film thickness of 10-35 $\mu$m, a basis weight of 10-25 g/m$^2$ and a Gurley value (JIS P8117) of no greater than 60 sec/100 cc, and
(4) said battery satisfies the following relationship I and II:

$$QprWp < qm + QnWn < 1.3QpWp \qquad I$$

$$QpWp < qm + QnWn < 1.3QpWp \qquad II$$

is satisfied, wherein the value of the total amount of lithium in the positive electrode active material in terms of electric charge is Qp (mAh/mg), the amount of lithium utilized for charge-discharge reaction of the lithium in the positive electrode active material in terms of electric charge is Qpr (mAh/mg), the value of the amount of lithium which can be doped in the negative electrode active material in terms of electric charge is Qn (mAh/mg), the value for the overcharge-preventing function of the separator is qm (mAh/cm$^2$), the weight of the positive electrode active material is Wp (mg/cm$^2$) and the weight of the negative electrode active material is Wn (mg/cm$^2$).

2. A battery according to 1. above, wherein QprWp/QnWn = 0.7-1.05.

3. A battery according to 1. above, wherein the positive electrode active material is a lithium-containing transition metal oxide represented by LiMO$_2$, where M is at least one metal element selected from the group consisting of cobalt, nickel, manganese, aluminum, iron, titanium and vanadium, and at least 1/3 of the atomic ratio composition of M is cobalt or nickel.

4. A battery according to 1. above, wherein the positive electrode active material is a lithium-containing transition metal oxide represented by LiM$_2$O$_4$ where M is at least one metal element selected from the group consisting of manganese, magnesium, nickel, cobalt, chromium, copper, iron and boron, and at least 1/3 of the atomic ratio composition of M is manganese.

5. A battery according to 1. above, wherein the positive electrode active material is lithium nickelate (LiNibO$_2$).

6. A battery according to 1, above, wherein the positive electrode active material is lithium manganate (LiMn$_2$O$_4$).

7. A battery according to 1. above, wherein the positive electrode active material is composed of lithium manganate (LiMn$_2$O$_4$) and lithium nickelate (LiNiO$_2$).

8. A battery according to 1. above, wherein the network-like support is a nonwoven fabric.

9. A battery according to 8. above, wherein the fiber composing the nonwoven fabric is composed of at least one type of high molecular weight polymer selected from the group consisting of polyolefins, polyphenylene sulfide, aromatic polyamides and polyesters.

10. A battery according to 1. above, wherein the network-like support is a cloth.

11. A battery according to 10. above, wherein the network-like support is a glass cloth.

12. A battery according to any one of 1. to 11. above, wherein the overcharge-preventing function value qm of the separator is in the range of 0.1-1.5 mAh/cm$^2$.

13. A battery according to 12. above, wherein the overcharge-preventing function value qm of the separator is in the range of 0.1-1.0 mAh/cm$^2$.

Brief Description of the Drawings

Fig. 1 is a reference graph showing voltage change during overcharge of ◎ in Evaluation 2.

4

Fig. 2 is a reference graph showing voltage change during overcharge of ○ in Evaluation 2.
Fig. 3 is a reference graph showing voltage change during overcharge of × in Evaluation 2.

Best Mode for Carrying Out the Invention

Preferred embodiments of the invention will now be described.

Non-aqueous secondary battery 1

The separator used in the non-aqueous secondary battery according to the first embodiment of the invention is composed of a porous film made of an organic polymer which includes a network-like support, and swells in the electrolyte solution and retains it, wherein the network-like support has a mean film thickness of 10-30 $\mu$m, a basis weight of 6-20 g/m$^2$, a Gurley value (JIS P8117) of no greater than 10 sec/100 cc and a McMullin number of no greater than 10 at 25°C and a (mean film thickness x. McMullin number) product of no greater than 200 $\mu$m, while the separator has a mean film thickness of 10-35 $\mu$m, a basis weight of 10-25 g/m$^2$ and a Gurley value (JIS P8117) of no greater than 60 sec/100 cc. This type of separator has the overcharge-preventing function described in WO01/67536.
The morphology of the separator is an important factor for exhibiting the overcharge-preventing function, and the Gurley value (JIS P8117) which is an indicator of this factor, is preferably no greater than 60 sec/100 cc. It is more preferably no greater than 30 sec/100 cc. In order to exhibit this range of Gurley value (JIS P8117), it is preferred to use a network-like support having a mean film thickness of 10-30 $\mu$m, a basis weight of 6-20 g/m$^2$ and a Gurley value (JIS P8117) of no greater than 10 sec/100 cc, and a separator having a mean film thickness of 15-35 $\mu$m and a basis weight of 10-25 g/m$^2$.
Also, the mean film thickness of the separator is preferably smaller in consideration of the energy density of the battery, and from this standpoint it is preferably no greater than 35 $\mu$m, which means that the mean film thickness of the network-like support is preferably no greater than 30 $\mu$m. The separator is preferably not too thin from the standpoint of preventing shorts, and is most suitably 11 $\mu$m or greater, which means that the mean film thickness of the network-like support is preferably at least 10 $\mu$m.
From the standpoint of achieving adequate battery characteristics, the separator must exhibit adequate ion permeability. From this viewpoint, the McMullin number of the network-like support is preferably no greater than 10 and the McMullin number x mean film thickness is preferably no greater than 200 $\mu$m. The McMullin number is an indicator of the ion conductivity, and it is determined by dividing the ion conductivity of the electrolyte solution by the ion conductivity of the network-like support when immersed in the electrolyte solution.
A nonwoven fabric or cloth (textile) may be mentioned as a preferred form of the network-like support, and the mean fiber size of the fiber composing it is preferably no greater than 10 $\mu$m and more preferably no greater than 5 $\mu$m. Since the overcharge-preventing function arises from the morphology of the separator and is basically independent of the material of which it is composed, there are no particular restrictions on the constituent material.
However, when the network-like support is a nonwoven fabric, the constituent material used may be a polyolefin-based material such as polyethylene or polypropylene, a polyester-based material such as polyethylene terephthalate or polybutylene terephthalate or polyphenylene sulfide, an aromatic polyamide or the like, or a mixture thereof, from the standpoint of small thickness, physical properties and durability. Polyethylene terephthalate or a mixture of polyethylene terephthalate and a polyolefin-based material is preferred.
The nonwoven fabric may be produced by a publicly known process. As examples there may be mentioned dry processes, spun bond processes, water needle processes, spun lace processes, wet sheeting processes, melt blow processes and the like. A wet sheeting process is particularly preferred in order to obtain a uniform, thin nonwoven fabric.
When the network-like support is a cloth (textile), a glass cloth is preferably used from the viewpoint of low thickness. An fiber-opened glass cloth is particularly preferred. The method for fiber-opening of the glass cloth is preferably a publicly known method such as ultrasonic treatment.
Using a glass cloth is preferred from the standpoint of obtaining a separator with higher mechanical properties and better handling properties compared to a nonwoven fabric. When the battery element is to be wound for application to a flat-molded battery (for example, a square cell), a glass cloth is most preferably used because of its high perforation strength and resistance to compression. It is also preferred from the standpoint of high thermal dimensional stability, its ability to prevent internal shorting by contact between the positive and negative electrodes even when the battery is exposed to high temperature, and safety. A glass cloth is also preferred from the viewpoint of high chemical stability and durability.
The organic polymer used for the invention which swells in the electrolyte solution and retains it is not particularly restricted and, for example, there may be mentioned polyvinylidene fluoride (PVdF), PVdF copolymers, polyacrylonitrile (PAN), polyethylene oxide (PEO), polymethyl methacrylate (PMMA) and the like, while mixtures of these may also be used. Organic polymers composed mainly of PVdF are particularly preferred among these from the standpoint of film formability and oxidation-reduction resistance. As organic polymers composed mainly of PVdF there may be mentioned copolymers such as hexafluoropropylene (HFP), chlorotrifluoroethylene (CTFE), perfluoromethylvinyl ether (PFMV) and the like. The molecular weight of such copolymers is preferably 100,000 to 1 million, as the weight-average molecular weight (Mw). The copolymer composition is most preferably:

$$\cdot \; VdF/HFP/CTFE$$

$$HFP = 2-8 \; wt\%$$

$$CTFE = 1-6 \; wt\%,$$

from the standpoint of heat resistance and adhesion with the electrodes.

There are no particular restrictions on the process for producing the separator, and for example, it may be produced by a wet film-forming process wherein a dope comprising the organic polymer dissolved in an organic solvent is impregnated into the nonwoven fabric, and the fabric is immersed in a solidifying bath (a mixture of the dope solvent and water) and then washed with water and dried. Here, a phase separating agent which is a weak solvent for the polymer may be added to the dope, or the composition of the solidifying bath adjusted, to control the morphology of the organic polymer layer of the separator. By placing both sides in the solidifying bath in contact with the solidifying bath so that solidification of both sides occurs at the same rate, it is possible to easily control the morphology of the separator.

However, an overcharge-preventing function cannot be reliably obtained merely by using the separator described above. Because the overcharge-preventing function described in WO01/67536 is exhibited via the lithium species deposited on the surface of the negative electrode during periods of overcharge, it is not exhibited in principle unless the total amount of lithium in the positive electrode is greater than the amount of lithium which can be doped into the negative electrode, as described in the publication; however, a constant amount of lithium must be present between the negative and positive electrodes in order to exhibit this function, and therefore the battery having the function must be designed with the amount of lithium in mind. Specifically, an overcharge-preventing function can be reliably exhibited by adjusting each of the amounts so that the following relationship I:

$$QprWp < qm + QnWn < 1.3QpWp \qquad\qquad I$$

is satisfied, wherein the value of the total amount of lithium in the positive electrode active material in terms of electric charge is $Qp$ (mAh/mg), the amount of lithium utilized for charge-discharge reaction of the lithium in the positive electrode active material in terms of electric charge is $Qpr$ (mAh/mg), the value of the amount of lithium which can be doped in the negative electrode active material in terms of electric charge is $Qn$ (mAh/mg), the value for the overcharge-preventing function of the separator is $qm$ (mAh/cm$^2$), the weight of the positive electrode active material is $Wp$ (mg/cm$^2$) and the weight of the negative electrode active material is $Wn$ (mg/cm$^2$).

The balance of capacity of the positive and negative electrodes and the design of the separator are important for the non-aqueous secondary battery of the invention, and if the non-aqueous secondary battery is designed so as to satisfy inequality I above, a cell will be obtained having an effective overcharge-preventing function and no insufficient charge phenomenon. The relationship is more preferably $QprWp \leq QnWn$ in consideration of the cycle characteristic. Even more preferably, the relationship $qm + QnWn \leq QpWp$ is satisfied. If this condition is satisfied, the overcharge-preventing function will be more reliably exhibited, the battery voltage will not exceed 5 V, decomposition of the electrolyte solution can be dramatically prevented, and the overcharged cell will be reusable. In contrast, in the range of $QpWp < qm + QnWn < 1.3QpWp$, the effect of the overcharge-preventing function is insufficient and decomposition reaction of the electrolyte solution proceeds; nevertheless, since the decomposition reaction of the electrolyte solution is significantly inhibited, an effect will be exhibited for ensuring safety during periods of overcharge. However, if $qm + QnWn$ is greater than $1.3QpWp$, virtually no effect of the overcharge-preventing function will be exhibited.

$Qp$ is determined by calculation from charge-discharge measurement and positive electrode active material composition analysis for an electrochemical cell employing the positive electrode as the working electrode and lithium metal as the counter electrode and reference electrode. When determined by calculation, however, $Qp$ represents the total amount of lithium, among the lithium in the positive electrode, which can dissociate from the positive electrode during the electrode reaction (electron transfer reaction), and therefore the electron source limit capacity must also be considered. For example, lithium manganate releases lithium ion by the driving force of $Mn^{3+}/Mn^{4+}$ redox, and therefore

the Qp of $Li_{1.135}Mn_{1.875}O_4$ is 9.6 x $10^{-2}$ (mAh/mg).

Qpr may be determined by charge-discharge measurement for an electrochemical cell employing the positive electrode as the working electrode and lithium metal as the counter electrode and reference electrode. In this measurement, the charge termination voltage is a voltage of 0.05 V higher than the charge termination voltage set for the non-aqueous secondary battery of the invention, and Qpr may be determined from the initial charging capacity at constant current, constant voltage charge, up to this voltage. That is, the weight of the positive electrode active material (the lithium-containing transition metal oxide) in the positive electrode used for the measurement is recorded beforehand, and the obtained initial charging capacity is divided by the active substance weight to determine Qpr. Here, a lower charge current density is preferred, and according to the invention the measurement is carried out at 1 mA/$cm^2$ or lower.

Qn may be determined by charge-discharge measurement for an electrochemical cell employing the negative electrode as the working electrode and lithium metal as the counter electrode and reference electrode. The condition for this measurement is 0 V cutoff constant current charging, and Qn may be determined from the initial charging capacity obtained by this measurement. That is, the weight of the negative electrode active material (material capable of lithium doping-dedoping) in the negative electrode used for the measurement is recorded beforehand, and the obtained initial charging capacity is divided by the active substance weight to determine Qpr. Here, the charge current density is 0.1 mA/$cm^2$.

In the electrochemical cell described above, the electrolyte solution used may be a non-aqueous electrolyte solution ordinarily employed for a lithium ion secondary battery.

Wp and Wn may be determined by a method of weight measurement after separating the binder or the conductive aid and the collector from the positive and negative electrodes, or a method of analyzing the composition of the electrodes.

The value of qm as the overcharge-preventing function property of the separator is the amount of lithium present between the negative and positive electrodes required to exhibit an overcharge-preventing function, and it is a characteristic value of the separator. The value of qm may be measured as follows. It may be measured using an electrochemical cell (for example, a coin cell) comprising a positive electrode/separator/copper foil laminate, with the electrolyte solution used being a non-aqueous electrolyte solution commonly used for lithium ion secondary batteries. The metal foil used for lamination in the cell does not necessarily have to be a copper foil, and the foil may be a metal which is stable even at the oxidation-reduction potential for lithium deposition and which does not have intercalated lithium (for example, SUS or the like). The value of qm may be determined by passing a current through the cell to deposit lithium metal on the copper foil, measuring the charge quantity at which voltage drop, voltage oscillation or voltage increase ceases, and dividing this by the electrode area. The current density for the measurement is preferably the actually employed charging current density, and generally 2-4 mA/$cm^2$ is suitable. The voltage sampling time during measurement is preferably no longer than 30 seconds.

As the non-aqueous secondary battery of the invention employs the aforementioned separator which must be designed so as to satisfy inequality I above, the positive electrode active material used may be any publicly known lithium-containing transition metal oxide. That is, lithium cobaltate, lithium nickelate, lithium manganate or the like may be used. Naturally, different element-substituted lithium cobaltate, lithium nickelate and lithium manganate may also be used so long as the concept described above is maintained. As different element-substituted compounds there may be mentioned lithium-containing transition metal oxides represented by $LiMO_2$ wherein at least 1/3 of the composition of M is cobalt or nickel, or lithium-containing transition metal oxides represented by $LiM_2O_4$ wherein at least 1/3 of the composition of M is manganese. Specifically, for $Li(M_{1x1}M_{2x2}M_{3x3}...)O_2$ ($M_1$ = Co or Ni, $M_2$, $M_3$ ... are other elements), x1 + x2 + x3 ... = 1, x1 > 1/3, and as different elements ($M_2$, $M_3$ ...) there may be mentioned manganese, aluminum, iron, titanium and vanadium. When $M_1$ = Ni, cobalt may be added as a different element, and when $M_1$ = Co, nickel may be added as a different element. For $Li(M_{1x1}M_{2x2}M_{3x3}...)_2O_4$ ($M_1$ = Mn, $M_2$, $M_3$ ... are other elements), x1 + x2 + x3 ... = 1, x1 > 1/3, and as different elements ($M_2$, $M_3$ ...) there may be mentioned magnesium, cobalt, nickel, chromium, copper, iron and boron.

The non-aqueous secondary battery of the invention exhibits a particularly notable effect when the positive electrode active material is lithium manganate or lithium nickelate. A mixture of these may also be used. Lithium nickelate is generally represented by $LiNiO_2$, and lithium manganate is generally represented by $LiMn_2O_4$. However, as mentioned above, these compounds substituted with different elements may also be included if within the scope of the concept of the invention.

The following reason is thought to explain why a particularly notable effect is exhibited when the construction of the non-aqueous secondary battery of the invention uses lithium manganate or lithium nickelate as the positive electrode active material. Specifically, it is currently common to use lithium cobaltate ($LiCoO_2$) as the positive electrode and a graphite-based material as the negative electrode, for a lithium ion secondary battery system used at a charging voltage of 4.2 V. Since the Qp value of lithium cobaltate is 0.278 mAh/mg and the Qpr is about 0.16 mAh/mg, the difference Qp-Qpr = 0.118 mAh/mg. In contrast, Qp-Qpr is 0.028 mAh/mg with lithium manganate ($LiMn_2O_4$) and 0.074 mAh/mg with lithium nickelate ($LiNiO_2$) under comparable conditions. A higher Qp-Qpr obviously facilitates establishment of inequality I above. Consequently, when lithium cobaltate is used as the positive electrode active material, it has been possible to obtain an overcharge-preventing function simply by using the separator of WO01/67536 as the separator in a conventional battery design. However, since Qp-Qpr is smaller with lithium nickelate or lithium manganate, the electrode and separator must be selected for inequality I to be satisfied, unlike in the case of lithium cobaltate.

Since no overcharge-preventing function is exhibited with current lithium ion secondary batteries employing polyolefin fine porous films as separators, deposition of lithium species on the surface of the negative electrode is undesirable, and therefore such batteries are usually designed with QnWn slightly higher than QprWp in order to minimize deposition of lithium species. This is also undesirable for the overcharge-preventing function, but this has not been a problem with lithium cobaltate which has a large Qp-Qpr; however, when lithium manganate or lithium nickelate with a small Qp-Qpr value is used as the positive electrode active material, this can be a factor preventing effective exhibition of the overcharge-preventing function.

In the case of lithium nickelate, design is facilitated due to the relatively large Qp-Qpr value, but lithium manganate results in a lower degree of design freedom because of the exceedingly small value. In such cases, it is effective to use it in combination with lithium nickelate.

Addition of lithium cobaltate which has a large Qp-Qpr value is also effective for satisfying inequality I, and such an addition does not fall outside of the concept of the invention.

A cell design with a low established charging voltage is one means for increasing the Qp-Qpr value. Specifically, Qp-Qpr can be significantly increased by changing the currently common 4.2 V charging specification to a 4.1 V charging specification. QnWn can also be reduced in such cases. This obviously facilitates establishment of inequality I, thereby making it easier to achieve an overcharge-preventing function.

Reducing the qm value is also important for establishing inequality I and obtaining an overcharge-preventing function. Specifically, a range of $0.1$-$1.5$ mAh/cm$^2$ is preferred, with the range of $0.1$-$1.0$ mAh/cm$^2$ being more preferred. A value of less than $0.1$ mAh/cm$^2$ is not preferred as it tends to result in a poor state of charge. The qm value is dependent on the morphology of the separator, and can be controlled by not only the basis weight or film thickness, but also the separator production conditions and the fiber size of the nonwoven fabric. There is a particularly good correlation with the Gurley value (JIS P8117) and, from this viewpoint, it is preferably no greater than 60 sec/100 cc and especially no greater than 30 sec/100 cc.

In a non-aqueous secondary battery according to the first embodiment of the invention, the range of QprWp/QnWn = $0.7$-$1.05$ is preferred and the range of QprWp/QnWn = $0.9$-$1.0$ is more preferred, from the standpoint of avoiding the insufficient charge phenomenon and cycle characteristic during the initial charging period.

The negative electrode and positive electrode used in the non-aqueous secondary battery of the invention in most cases are each composed of a mixture layer comprising the active substance and a binder polymer binding it and retaining the electrolyte solution, and a collector. A conductive aid may also be included in the mixture layer.

The negative electrode active material may be any material capable of reversible doping/dedoping of lithium, and there may be mentioned carbon-based materials, metal oxides such as $SiO_x$ ($0<x<2$), $SnSiO_3$ and $SnO_2$, metal compounds comprising elements such as Si, Sn, Mg, Cu, Pb, Cd and the like, such as $Mg_2Si$ or $SiF_4$, lithium nitrides such as $Li_3N$, $Li_7MnN_4$, $Li_3FeN_2$ or $Li_{2.6}Co_{0.4}N$, antimony compounds such as $CoSb_3$ or $Ni_2MnSb$, and high molecular compounds such as polyacene, any of which may be used alone or in mixtures of two or more. Carbon-based materials have low charge-discharge potential close to lithium metal, and therefore facilitate high energy densification and permit a satisfactory cycle characteristic to be achieved. As carbon-based materials there may be mentioned polyacrylonitrile, phenol resins, phenol-novolac resins, fired organic polymers such as cellulose, fired coke or pitch, artificial graphite, natural graphite, and the like. Graphite is preferred among such carbon-based materials because of the large number of electrochemical equivalents. Non-graphitizing carbon is preferred because it can yield a satisfactory cycle property. Here, the content of the non-graphitizing carbon is preferably 3-60% with respect to the total weight of the negative electrode material. From the standpoint of achieving high energy densification, a compound containing Si is preferably included. The content of the Si-containing compound in the negative electrode mixture layer is preferably 1-50% with respect to the total weight of the negative material.

In order to achieve a satisfactory cycle characteristic for the non-aqueous secondary battery, the specific surface area of the negative electrode material is preferably no greater than $5.0$ m$^2$/g. The packing density of the negative electrode material in the negative electrode mixture layer is preferably at least 40% of the true density of the negative electrode material.

The positive electrode active material may be a lithium-containing transition metal oxide which is typically lithium cobaltate, lithium nickelate or lithium manganate, and this is particularly preferred when lithium nickelate or lithium manganate, or a mixture thereof, is used as described above. A different element-substituted compound is also contained in the negative electrode active material in a range which does not fall outside of the concept of the invention. From the standpoint of battery safety, $LiFePO_4$ having an olivine structure is preferably added, and this does not fall outside of the concept of the invention.

Such lithium complex oxides are prepared, for example, by mixing a lithium carbonate, nitrate, oxide or hydroxide with a transition metal carbonate, nitrate, oxide or hydroxide to a prescribed composition, pulverizing the mixture and then firing it at a temperature in the range of 600-1000°C in an oxygen atmosphere.

The powder particle size of the positive electrode active material is preferably specified by a 50% cumulative size of 3-35 $\mu$m, a 10% cumulative size of 1-20 $\mu$m and a 90% cumulative size of 6-50 $\mu$m, and the specific surface area of the positive electrode active material is preferably specified as 0.1-2 m$^2$/g. Satisfying these conditions increases the possibility of avoiding higher internal resistance or the risk of thermal runaway of the battery.

The positive electrode mixture layer may further comprise a metal carbonate such as lithium carbonate ($Li_2CO_3$). Including such a metal carbonate is preferred to allow further improvement in the cycle characteristic. This is believed to result from partial decomposition of the metal carbonate at the positive electrode and formation of a stable coating at the negative electrode.

The binder polymer used is preferably polyvinylidene fluoride (PVdF) or a PVdF copolymer resin which may be a copolymer of PVdF with hexafluoropropylene (HFP), perfluoromethylvinyl ether (PFMV), a fluorine resin such as polytetrafluoroethylene or fluororubber, a polyimide resin, or the like. These may be used alone or in combinations of two or more. For the negative electrode there is preferably used a polymer having a diene structure such as polybutadiene, butadiene-acrylonitrile copolymer, styrene-butadiene copolymer or polyisoprene, from the standpoint of adjustment. However, when a polymer with a diene structure is used as the binder, it is preferred to use a thickening agent in combination therewith. Suitable thickening agents include carboxymethylcellulose derivatives, and specifically there may be mentioned alkali salts and ammonium salts of carboxymethylcellulose. These binder polymers are preferably combined in a range of 3-30 wt% with respect to the weight of the positive electrode active material.

Acetylene black or the like is preferably used as the conductive aid. Conductive fiber materials composed of carbon, copper, nickel or the like having a mean fiber size of about 5-100 nm are also preferred from the standpoint of obtaining a satisfactory cycle characteristic. The contents of these conductive aids are preferably in the range of 0-45 wt% with respect to the positive electrode active material.

For the collector, a material with excellent oxidation resistance is preferably used in the positive electrode and a material with excellent reduction resistance is preferably used in the negative electrode. Specifically, there may be mentioned aluminum, stainless steel or the like as the positive electrode collector, and copper, nickel, stainless steel or the like as the negative electrode collector. The collector may be used in the form of a foil or mesh. In particular, an aluminum foil is preferred as the positive electrode collector and a copper foil is preferred as the negative electrode collector.

The method employed for fabricating the electrode described above is not particularly restricted and may be a publicly known method.

The non-aqueous secondary battery of the invention may employ a solution of a lithium salt in a non-aqueous solvent commonly used for lithium ion secondary batteries.

As specific non-aqueous solvents there may be mentioned propylene carbonate (PC), ethylene carbonate (EC), butylene carbonate (BC), vinylene carbonate (VC), dimethyl carbonate (DMC), diethyl carbonate (DEC), methylethyl carbonate (EMC), methylpropyl carbonate, 1,2-dimethoxyethane (DME), 1,2-diethoxyethane (DEE), $\gamma$-butyrolactone ($\gamma$-BL), $\gamma$-valerolactone ($\gamma$-VL), acetonitrile, methoxyacetonitrile, glutaronitrile, adiponitrile, 3-methoxypropyronitrile, N,N-dimethylformamide, N-methylpyrrolidine, N-methyloxazolidinone, N,N-dimethylimidazolidine, nitromethane, nitroethane, sulfolane, dimethyl sulfoxide, trimethyl phosphate, phosphazine-based compounds and the like. Some of the hydroxyl groups of these compounds may also be replaced with fluorine.

The non-aqueous solvent may be used alone or in a combination of two or more. These non-aqueous solvents preferably have intrinsic viscosities of no greater than 10.0 mPa·s at 25°C.

Particularly preferred for use are one or more solvents selected from among PC, EC, $\gamma$-BL, DMC, DEC, MEC and DME. The solvent used also preferably contains at least one from among EC and PC, for a more notably improved cycle characteristic. A mixture of EC and PC is especially preferred since it will allow the cycle characteristic to be even further improved.

However, when graphite is used as the negative electrode, the concentration of PC in the non-aqueous solvent is preferably less than 30 wt%. Since PC has relatively high reactivity for graphite, an excessively high PC concentration can result in inferior properties. When the non-aqueous solvent contains EC and PC, the mixing weight ratio of EC with respect to PC (EC/PC) in the non-aqueous solvent is preferably at least 0.5.

The non-aqueous solvent preferably contains at least one chain carbonic acid ester such as DEC, DMC, EMC or methylpropyl carbonate, in order to further improve the cycle characteristic.

The non-aqueous solvent more preferably contains at least one from among 2,4-difluoroanisol (DFA) and vinylene carbonate (VC). DFA can improve the discharge capacity, while VC can improve the cycle characteristic. A mixture of these is preferably used in order to improve both the discharge capacity and the cycle characteristic.

The concentration of DFA in the non-aqueous solvent is preferably no greater than, for example, 15 wt%. If the concentration is too high, improvement in the discharge capacity may be insufficient. The concentration of VC in the non-aqueous solvent is preferably no greater than, for example, 15 wt%. If the concentration is too high, the improvement in the cycle characteristic may be insufficient.

Addition of a pyrocarbonate compound such as dimethyl dicarbonate, a disulfide compound, a compound having a sulfite structure such as ethylene sulfite, a compound having a CSC structure such as 1-benzothiophene, a compound having a NCON structure such as 1,3-dimethyl-2-imidazolidinone, a compound having an OCON structure such as 3-methyl-2-oxazolidinone, a compound having a OCOO structure such as $\gamma$-BL, or vinyl ethylenecarbonate, divinyl ethylenecarbonate or the like to the electrolyte solution is preferred from the standpoint of improving the cycle characteristic or storage properties and increasing the reliability of the battery. These compounds may be used alone or in combinations of two or more.

Examples of suitable lithium salts include $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiAlCl_4$, $LiSiF_6$, $Li[(OCO)_2]_2B$, LiCl and LiBr, and any one or mixtures of two or more of which may be used. $LiPF_6$ is preferred among these in order to obtain high ion conductivity while further improving the cycle characteristic. There is no particular restriction on the concentration of the lithium salt in the non-aqueous solvent, but it is preferably in the range of 0.1-5.0 mol/dm$^3$ and more preferably in the range of 0.5-3.0 mol/dm$^3$. It is possible to increase the ion conductivity of the electrolyte solution in this concentration range.

The shape of the non-aqueous secondary battery of the invention may be any commonly used shape such as cylindrical, square, button-shaped, film-sheathed or the like. In the case of a cylindrical or square metal can sheath type, the metal can may be made of stainless steel, aluminum or the like. In the case of a film sheath, an aluminum laminate film may be used. According to the invention, the separator is most preferably a film sheath in order to result in a satisfactory electrolyte solution storage property and adhesion with the electrodes.

The charging method for the battery will generally be constant current or constant voltage charging. However, during the period of initial charging, these methods may result in abnormal current crowding, or an insufficient charge phenomenon even if inequality I above is satisfied (the insufficient charge phenomenon during the period of initial charging will hereinafter be referred to as "initial insufficient charge phenomenon"). In order to avoid this, the method may involve initial charging at a low rate. When initial charging is carried out at a higher rate, a procedure of carrying out charging up to an appropriate charging rate followed by aging is effective for avoiding insufficient charge. Gas release is preferably accomplished during such aging.

Non-aqueous secondary battery 2 (not claimed)

When considering further increased capacity of the non-aqueous secondary battery of the invention, a negative electrode may be employed which includes the capacity component from deposition and dissolution of lithium in addition to the capacity component due to lithium doping/dedoping into the negative electrode active material. The separator used in the non-aqueous secondary battery according to the second embodiment of the disclosure is composed of a porous film made of an organic polymer, which includes a network-like support, and swells in the electrolyte solution and retains it, wherein the network-like support has a mean film thickness of 10-30 $\mu$m, a basis weight of 6-20 g/m$^2$, a Gurley value (JIS P8117) of no greater than 10 sec/100 cc and a McMullin number of no greater than 10 at 25°C and a (mean film thickness x McMullin number) product of no greater than 200 $\mu$m, while the separator has a mean film thickness of 10-35 $\mu$m, a basis weight of 10-25 g/m$^2$ and a Gurley value (JIS P8117) of greater than 60 sec/100 cc and no greater than 500 sec/100 cc.

A separator having a Gurley value (JIS P8117) of 60 sec/100 cc or smaller has a small qm and, as such a battery exhibits a small QnWn value, it is difficult to satisfy the condition QprWp < qm + QnWn in the aforementioned inequality I. The battery will therefore be prone to the insufficient charge phenomenon. Therefore, a relatively large qm is preferred in such a battery, and preferably the separator used has a Gurley value (JIS P8117) of greater than 60 sec/100 cc and no greater than 500 sec/100 cc. It is more preferably greater than 60 sec/100 cc and no greater than 200 sec/100 cc, particularly greater than 60 sec/100 cc and no greater than 150 sec/100 cc, and especially at least 80 sec/100cc and no greater than 150 sec/100 cc. The specific qm value is preferably in the range of 1.0-5.0 mAh/cm$^2$ and more preferably in the range of 1.5-3.0 mAh/cm$^2$.

Control of the Gurley value (JIS P8117) of the separator to within these ranges is accomplished by controlling the morphology of the network-like support or the layer comprising the organic polymer. Control of the morphology of the organic polymer layer is especially important, and this can be easily accomplished by changing the film-forming conditions in the wet film-forming method used to produce the separator.

The rest of the construction of the separator used in this non-aqueous secondary battery is basically the same as the separator used in the non-aqueous secondary battery according to the invention described above.

This non-aqueous secondary battery and the non-aqueous secondary battery according to the invention described above are identical in the fundamental concept of satisfying inequality I, differing only in the separator explained above. Using this type of separator provides the following two advantages.

In the non-aqueous secondary battery of the first embodiment, the insufficient charge phenomenon occurs relatively easily during the initial charging period and the initial charging is therefore difficult. However, the non-aqueous secondary battery of this second example of the disclosure has the advantage of facilitating the initial charging.

This non-aqueous secondary battery permits a design with high capacity, and employs a negative electrode which includes the capacity component from deposition and dissolution of lithium in addition to the capacity component due to lithium doping/dedoping into the negative electrode active material. That is, the amount of lithium utilized for a charge-discharge reaction of the lithium at the positive electrode in terms of electric charge (QprWp) is greater than the amount of lithium which can be doped in the negative electrode active material of the negative electrode in terms of electric charge (QnWn). In this type of non-aqueous secondary battery, a range of QprWp/QnWn = 1.05-4.0 is preferred from the standpoint of the cycle characteristic. If this ratio exceeds 4.0, the cycle characteristic will be notably impaired.

When the aforementioned high capacity design (specifically, QprWp/QnWn = 1.05-4.0) is employed in this second example of a non-aqueous secondary battery, observation of the negative electrode in the fully charged state reveals silver coloring due to a plating of lithium metal. Also, measurement of the negative electrode in the fully charged state by $^7$Li multinuclear magnetic resonance spectroscopy results in observation of both a lithium metal peak and a lithium ion peak. In addition, differential scanning calorimetry (DSC) analysis yields an endothermic peak due to melting of lithium metal, while Raman scattering spectroscopy reveals a scattering peak in the wavelength region of 1800-1900 $cm^{-1}$.

The rest of the construction of this non-aqueous secondary battery is the same as the non-aqueous secondary battery of the invention described above.

The charging method for this non-aqueous secondary battery may also be ordinary constant current or constant voltage charging. In particular, when employing a high capacity design (specifically, Qprwp/Qnwn = 1.05-4.0), a charging current of no greater than 1.5 C is preferred to avoid impairing the cycle characteristic. Also, charging at no greater than 0.8 C is preferred for the initial charging during production of the battery, as this condition will prevent subsequent impairment of the cycle characteristic. With a high capacity design (specifically, QprWp/QnWn = 1.05-4.0) for this non-aqueous secondary battery, the insufficient charge phenomenon may occur due to abnormal current crowding during the period of initial charging even if inequality I is satisfied, but the aforementioned initial charging conditions can avoid the insufficient charge phenomenon during the initial charging period. In order to avoid the initial insufficient charge phenomenon, it is preferred to carry out a procedure of charging up to an appropriate charging rate for aging, and a step for release of generated gas is also preferably carried out during the initial charging period. Another suitable method is charging by application of an intermittent voltage with an off-duty period of at least 1 ms (millisecond), to allow a satisfactory cycle characteristic to be achieved. This procedure may be suitably employed for the initial charging or for subsequent charging.

The present invention will now be more fully explained in by examples, with the understanding that these examples are in no way limitative on the invention.

Experimental Example 1

Experimental Example 1 was carried out to examine inequality I in detail.

Separator

Measuring method for McMullin number

**[0082]** An electrolyte solution-impregnated nonwoven fabric was sandwiched between 20 mm$\phi$ SUS electrodes, the alternating current impedance was measured at 10 kHz, and the ion conductivity was calculated. The McMullin number was determined by dividing this value into the ion conductivity of the electrolyte solution alone as measured with a separate conductivity meter. Here, the measuring temperature was 25°C and the electrolyte solution was 1 mol/dm$^3$ LiBF$_4$EC/PC (1/1 weight ratio).

Measuring method for qm

The method described below for electrode fabrication was used to fabricate a positive electrode comprising aluminum foil as the collector, having a composition of LiCoO$_2$:PVdF:acetylene black = 89.5:6:4.5 (weight ratio), with a basis weight of 23 mg/cm$^2$ (electrode layer) and a density of 2.8 g/m$^3$ (electrode layer). The positive electrode ($\phi$14 mm), a copper foil ($\phi$15 mm) and a separator ($\phi$16 mm) were used to produce a coin cell (CR2032) comprising the positive electrode/separator/copper foil (effective electrode area: 1.54 cm$^2$). For the electrolyte solution there was used 1 mol/dm$^3$ LiPF$_6$EC/EMC (3/7 weight ratio). The cell was electrified at a current density of 3 mA/cm$^2$ for electrodeposition of lithium metal on the copper foil. The electric charge at which termination of voltage drop, voltage oscillation or voltage rise began was measured, and this was divided by the electrode area to determine the qm value.

Fabrication of separator

Separator A

A PET staple fiber with a fiber size of 0.11 dtex (product of Teijin Co., Ltd.) was used as the main fiber. A PET staple fiber with a fiber size of 1.21 dtex (product of Teijin Co., Ltd.) was used as the binder fiber. The main fiber and binder fiber were mixed in a proportion of 6:4, and a nonwoven fabric with a mean film thickness of 17 $\mu$m and a basis weight of 14 g/m$^2$ was obtained by a wet sheeting method. The McMullin number of the nonwoven fabric was 4.2, and the (McMullin number x mean film thickness) product was 71.4. The Gurley value (JIS P8117) was 0.1 sec/100 cc or smaller.

A PVdF copolymer having a composition of vinylidene fluoride:hexafluoropropylene:chlorotrifluoroethylene = 92.2:4.4:3.4 (weight ratio) and a weight average molecular weight Mw of 410,000 was dissolved in a 6/4 (weight ratio) mixed solvent of N,N-dimethylacetamide (DMAc) and polypropylene glycol with an average molecular weight of 400 (PPG-400), to a copolymer concentration of 12 wt% at 60˚C, to prepare a film-forming dope. The aforementioned nonwoven fabric was dip coated in the obtained dope, and then immersed in an aqueous solution with a 40 wt% solvent concentration for solidification and washed with water and dried to obtain a nonwoven fabric-reinforced separator. The mean film thickness of the separator was 29 $\mu$m and the basis weight was 21 g/m$^2$. The Gurley value (JIS P8117) of this separator was 29 sec/100 cc. The qm value was 1.15 mAh/cm$^2$.

Separator B

A PET staple fiber with a fiber size of 0.11 dtex (product of Teijin Co., Ltd.) was used as the main fiber. A core-sheath staple fiber with a fiber size of 0.77 dtex, comprising PP as the core section and PE as the sheath section (product of Daiwabo Co., Ltd.) was used as the binder fiber. The main fiber and binder fiber were mixed in a proportion of 1:1, and a nonwoven fabric with a mean film thickness of 20 $\mu$m and a basis weight of 12 g/m$^2$ was obtained by a wet sheeting method. The McMullin number of the nonwoven fabric was 9.6, and the (McMullin number x mean film thickness) product was 192. The Gurley value (JIS P8117) was 0.1 sec/100 cc or smaller.

A PVdF copolymer having a composition of vinylidene fluoride:hexafluoropropylene:chlorotrifluoroethylene = 92.2:4.5:3.5 (weight ratio) and a weight average molecular weight Mw of 410,000 was dissolved in a 7/3 (weight ratio) mixed solvent of N,N-dimethylacetamide (DMAc) and tripropylene glycol (TPG), to a copolymer concentration of 12 wt% at 25˚C, to prepare a film-forming dope. The aforementioned nonwoven fabric was dip coated in the obtained dope, and then immersed in an aqueous solution with a 50 wt% solvent concentration for solidification and washed with water and dried to obtain a nonwoven fabric-reinforced separator. The mean film thickness of the separator was 25 $\mu$m and the basis weight was 18 g/m$^2$. The Gurley value (JIS P8117) of this separator was 21 sec/100 cc. The qm value was 0.40 mAh/cm$^2$.

Separator C

A PET staple fiber with a fiber size of 0.33 dtex (product of Teijin Co., Ltd.) was used as the main fiber. A PET staple fiber with a fiber size of 0.22 dtex (product of Teijin Co., Ltd.) was used as the binder fiber. The main fiber and binder fiber were mixed in a proportion of 5:5, and a nonwoven fabric with a mean film thickness of 18 $\mu$m and a basis weight of 12 g/m$^2$ was obtained by a wet sheeting method. The McMullin number of the nonwoven fabric was 6.3, and the (McMullin number x mean film thickness) product was 113.4. The Gurley value (JIS P8117) was 0.1 sec/100 cc or smaller.

A PVdF copolymer having a composition of vinylidene fluoride:hexafluoropropylene:chlorotrifluoroethylene = 92.2:4.4:3.4 (weight ratio) and a weight average molecular weight Mw of 410,000 was dissolved in a 7/3 (weight ratio) mixed solvent of N,N-dimethylacetamide (DMAc) and tripropylene glycol (TPG), to a copolymer concentration of 12 wt% at 30˚C, to prepare a film-forming dope. The aforementioned nonwoven fabric was dip coated in the obtained dope, and then immersed in an aqueous solution with a 50 wt% solvent concentration for solidification and washed with water and dried to obtain a nonwoven fabric-reinforced separator. The mean film thickness of the separator was 24 $\mu$m and the basis weight was 17 g/m$^2$. The Gurley value (JIS P8117) of this separator was 12 sec/100 cc. The qm value was 0.79 mAh/cm$^2$.

Separator D

A PET staple fiber with a fiber size of 0.33 dtex (product of Teijin Co., Ltd.) was used as the main fiber. A PET staple fiber with a fiber size of 0.22 dtex (product of Teijin Co., Ltd.) was used as the binder fiber. The main fiber and the binder fiber were mixed in a proportion of 5:5, and a nonwoven fabric with a mean film thickness of 18 $\mu$m and a

basis weight of 12 g/m$^2$ was obtained by a wet sheeting method. The McMullin number of the nonwoven fabric was 6.3, and the (McMullin number x mean film thickness) product was 113.4. The Gurley value (JIS P8117) was 0.1 sec/100 cc or smaller.

A PVdF copolymer having a composition of vinylidene fluoride:hexafluoropropylene:chlorotrifluoroethylene = 92.2:4.4:3.4 (weight ratio) and a weight average molecular weight Mw of 410,000 was dissolved in a 7/3 (weight ratio) mixed solvent of N,N-dimethylacetamide (DMAc) and tripropylene glycol (TPG), to a copolymer concentration of 18 wt% at 90°C, to prepare a film-forming dope. The aforementioned nonwoven fabric was dip coated in the obtained dope, and then immersed in an aqueous solution with a 43 wt% solvent concentration for solidification and washed with water and dried to obtain a nonwoven fabric-reinforced separator. The mean film thickness of the separator was 25 $\mu$m and the basis weight was 21 g/m$^2$. The Gurley value (JIS P8117) of this separator was 128 sec/100 cc. The qm value was 3.50 mAh/cm$^2$.

Separator E

A fiber-opened glass cloth (No. E02E F 105B ST; product of Unitika Glass Fibers) having a basis weight of 17 g/m$^2$, a mean film thickness of 18 $\mu$m and a yarn density of 95/95 (warp/weft)/25 mm was used as the base. The McMullin number of the glass cloth was 7.4, and the (McMullin number x mean film thickness) product was 133. The Gurley value (JIS P8117) was 0.01 sec/100 cc.

A PVdF copolymer having a composition of vinylidene fluoride:hexafluoropropylene:chlorotrifluoroethylene = 92.2:4.4:3.4 (weight ratio) and a weight average molecular weight Mw of 410,000 was dissolved in a 7/3 (weight ratio) mixed solvent of N,N-dimethylacetamide (DMAc) and tripropylene glycol (TPG), to a copolymer concentration of 18 wt% at 90°C, to prepare a film-forming dope. The aforementioned glass cloth was dip coated in the obtained dope, and then immersed in an aqueous solution with a 43 wt% solvent concentration for solidification and washed with water and dried to obtain a glass cloth-reinforced separator. The mean film thickness of the separator was 24 $\mu$m and the basis weight was 24 g/m$^2$. The Gurley value (JIS P8117) of this separator was 125 sec/100 cc. The qm value was 2.97 mAh/cm$^2$.

Separator F

A separator with a mean film thickness of 22 $\mu$m and a basis weight of 21 g/m$^2$ was fabricated by the same fabrication method used for Separator E. The Gurley value (JIS P8117) of this separator was 104 sec/100 cc. The qm value was 2.03 mAh/cm$^2$.

Separator G

The same nonwoven fabric of Separator A was used as the base. A film-forming dope was prepared by dissolving PVdF in N,N-dimethylacetamide (DMAc) to 10 wt%. The nonwoven fabric base material was dip coated in the obtained dope and then the solvent was dried to obtain a nonwoven fabric-reinforced separator. The mean film thickness of the separator was 25 $\mu$m, and the basis weight was 30 g/m$^2$. The separator was so impermeable that the Gurley value was unmeasurable. The qm value was also unmeasurable.

The properties and base materials of Separators A to G obtained in the manner described above are summarized in Table 1.

Table 1

| | Nonwoven fabric | | | | Separator | | | |
|---|---|---|---|---|---|---|---|---|
| | Mean film thickness $\mu$m | Basis weight g/m$^2$ | Gurley value sec/ 100 cc | McMullin number | Mean film thickness $\mu$m | Basis weight g/m$^2$ | Gurley value sec/ 100 cc | qm mAh/cm$^2$ |
| Separator A | 17 | 14 | <0.1 | 4.2 | 29 | 21 | 29 | 1.15 |
| Separator B | 20 | 12 | <0.1 | 9.6 | 25 | 18 | 21 | 0.40 |
| Separator C | 18 | 12 | <0.1 | 6.3 | 24 | 17 | 12 | 0.79 |
| Separator D | 18 | 12 | <0.1 | 6.3 | 25 | 21 | 128 | 3.50 |
| Separator E | 17 | 18 | <0.1 | 7.4 | 24 | 24 | 125 | 2.97 |
| Separator F | 17 | 18 | <0.1 | 7.4 | 22 | 21 | 104 | 2.03 |
| Separator G | 17 | 14 | <0.1 | 4.2 | 25 | 30 | unmeasurable | unmeasurable |

Electrodes

Positive electrode

A positive electrode paste was prepared using 89.5 parts by weight of a positive electrode active material powder, 4.5 parts by weight of acetylene black, and a 6 wt% solution of PVdF in N-methylpyrrolidone (NMP) with PVdF at a dry weight of 6 parts by weight. The resulting paste was coated and dried on a 20 $\mu$m-thick aluminum foil and then pressed to fabricate a positive electrode.

Lithium cobaltate ($LiCoO_2$), lithium nickelate ($LiNiO_2$), lithium manganate ($LiMn_2O_4$) and a mixture of $LiNiO_2$ and $LiMn_2O_4$ were used as positive electrode active materials. In the mixture of $LiNiO_2$ and $LiMn_2O_4$, the mixing ratios (weight ratios) were $LiNiO_2/LiMn_2O_4$ = 3/7, 5/5, 7/3. For each system, the positive electrode was fabricated to give the active substance weight Wp shown in Table 2.

Qp

Qp was determined by calculation from the composition of $LiCoO_2$, $LiNiO_2$ and $LiMn_2O_4$. Specifically, these were Qp (mAh/mg) = 0.278 ($LiCoO_2$), 0.278 ($LiNiO_2$) and 0.148 ($LiMn_2O_4$). For the mixed system ($LiNiO_2/LiMn_2O_4$), Qp was determined by proportional calculation based on the weight ratio.

Qpr

A coin cell (CR2032) is fabricated using the positive electrode fabricated above and using a lithium foil as the counter electrode, after which constant current, constant voltage charging is carried out to 4.25 V at a current density of 0.5 mA/cm$^2$ (terminating at a current value of 10 $\mu$A/cm$^2$), and Qpr can be determined by dividing the charging capacity (QprWp) during that time by the active substance weight (Wp). A polyolefin fine porous film (CELGARD #2400: product of Celgard Co., Ltd.) was used for the separator in the cell, and 1 mol/dm$^3$ $LiPF_6$EC/EMC (3/7 weight ratio) was used as the electrolyte solution.

The QpWp and QprWp values obtained by this method are shown in Table 2.

Table 2

|  | Active substance | Wp mg/cm$^2$ | QpWp mAh/cm$^2$ | QprWp mAh/cm$^2$ |
|---|---|---|---|---|
| Co-1 | $LiCoO_2$ | 1.9 | 0.53 | 0.29 |
| Co-2 |  | 9.1 | 2.53 | 1.41 |
| Co-3 |  | 20.5 | 5.70 | 3.18 |
| Ni-1 | $LiNiO_2$ | 4.4 | 1.23 | 0.88 |
| Ni-2 |  | 7.1 | 1.96 | 1.41 |
| Ni-3 |  | 15.9 | 4.42 | 3.18 |
| Mn-1 | $LiMn_2O_4$ | 7.4 | 1.09 | 0.88 |
| Mn-2 |  | 34.2 | 5.06 | 4.10 |
| Mn-3 |  | 45.4 | 6.72 | 5.45 |
| Ni/Mn-1 | $LiNiO_2/LiMn_2O_4$ = 3/7 | 22.0 | 4.11 | 3.17 |
| Ni/Mn-2 | $LiNiO_2/LiMn_2O_4$ = 5/5 | 22.0 | 4.69 | 3.52 |
| Ni/Mn-3 | $LiNiO_2/LiMn_2O_4$ = 7/3 | 22.0 | 5.26 | 3.87 |

Negative electrode

A negative electrode paste was prepared using 87 parts by weight of mesophase carbon microbeads (MCMB: product of Osaka Gas & Chemical Co.) powder, 3 parts by weight of acetylene black and a 6 wt% solution of PVdF in NMP with PVdF at a dry weight of 10 parts by weight, as the negative electrode active material. The resulting paste was coated and dried on an 18 $\mu$m-thick copper foil and then pressed to fabricate a negative electrode.

Negative electrodes were fabricated to give the active substance weights Wn shown in Table 3.

Qn

A coin cell (CR2032) is fabricated using the negative electrode fabricated above and using a lithium foil as the counter electrode, after which constant current charging is carried out to 0 V at a current density of 0.1 mA/cm$^2$, and Qn can be determined by dividing the charging capacity (QnWn) during that time by the active substance weight (Wp). A polyolefin fine porous film (CELGARD #2400: product of Celgard Co., Ltd.) was used for the separator in the cell, and 1 mol/dm$^3$ LiPF$_6$EC/EMC (3/7 weight ratio) was used as the electrolyte solution.

The QnWn values obtained by this method are also shown in Table 3.

Table 3

|  | Wn mg/cm$^2$ | QnWn mAh/cm$^2$ |
|---|---|---|
| N-1 | 0.9 | 0.30 |
| N-2 | 2.7 | 0.90 |
| N-3 | 4.6 | 1.50 |
| N-4 | 9.7 | 3.20 |
| N-5 | 12.4 | 4.10 |
| N-6 | 16.7 | 5.50 |
| N-7 | 10.9 | 3.60 |
| N-8 | 11.8 | 3.90 |
| N-9 | 6.5 | 2.14 |

Evaluation with coin cells

Fabrication of coin cells

Coin cells (CR2032) were fabricated in the following manner using each of the separators, positive electrodes and negative electrodes described above. After punching the positive electrode to φ14 mm, the negative electrode to φ15 mm and the separator to φ16 mm, they were stacked in the order: positive electrode/separator/negative electrode. The combination was immersed in the electrolyte solution and encapsulated in a battery case. The electrolyte solution used was 1 mol/dm$^3$ LiPF$_6$EC/EMC (3/7 weight ratio).

The combinations of separator, positive electrode and negative electrode are shown in Fig. 4. Table 4 also shows the values for QprWp, qm+WnQn, QpWp and 1.3QpWp calculated from the aforementioned measurement results.

Evaluation 1

Each fabricated coin cell was subjected to constant current, constant voltage charging carried out to 4.25 V at a current density of 0.2 C based on QprWp (charging terminating condition: 10 μA/cm$^2$), and then to constant current charging with a cutoff of 2.75 V at the same current density. The results are shown in Table 4. Cells which did not satisfy the charging termination condition due to an early overcharge-preventing function were considered to have insufficient charging, and were evaluated as ×. Cells which satisfied the charging termination condition and had an initial charge/discharge efficiency of 85% or greater were considered to be free of initial insufficient charging, and were evaluated as ○. The results are shown in Table 4.

Evaluation 2

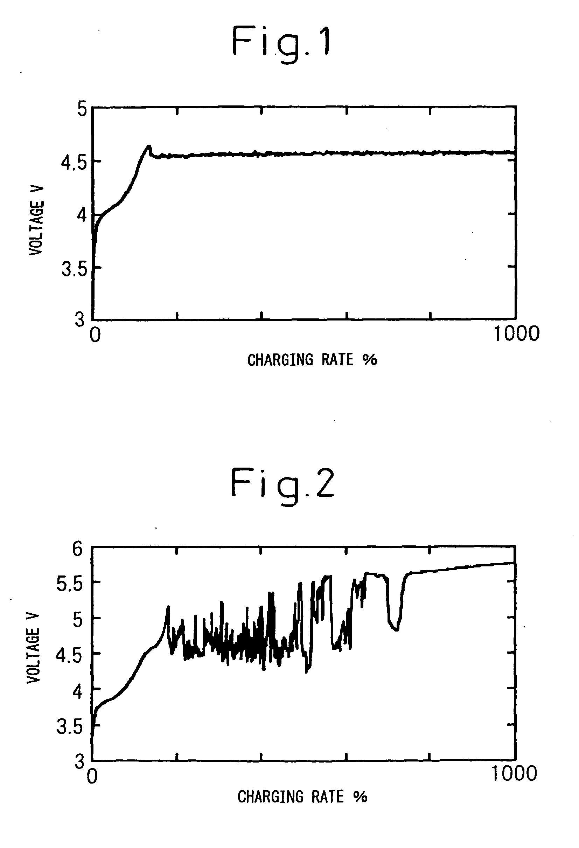

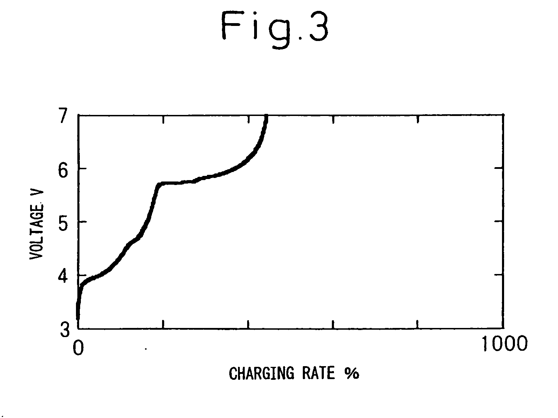

Each fabricated coin cell was subjected to overcharging by charging with an electric charge of 1000% with respect to QprWp, at a current density of 1C based on QprWp. The results are shown in Table 4. Cells with a constant voltage in a range below 5 V as shown in Fig. 1 were evaluated as ◎. Cells which exhibited voltage oscillation as shown in Fig. 2 and were confirmed to have an overcharge-preventing function, but which had high oscillation exceeding 5 V or ceased oscillation during charging were evaluated as ○. Cells in which absolutely no voltage oscillation was observed as shown in Fig. 3 and which exhibited about 5.5 V were evaluated as ×. The results are shown in Table 4.

Table 4

| No. | Separator | Positive electrode | Negative electrode | QprWp mAh/cm$^2$ | qm+QnWn mAh/cm$^2$ | QpWp mAh/cm$^2$ | 1.3QpWp mAh/cm$^2$ | Evaluation 1 | Evaluation 2 |
|---|---|---|---|---|---|---|---|---|---|
| 1 | A | Co-1 | N-1 | 0.29 | 1.45 | 0.53 | 0.69 | ○ | × |
| * 2 | A | Co-2 | N-3 | 1.41 | 2.65 | 2.53 | 3.23 | ○ | ○ |
| 3 | A | Co-3 | N-4 | 3.18 | 4.35 | 5.70 | 7.41 | ○ | ◎ |
| 4 | B | Co-2 | N-3 | 1.41 | 1.90 | 2.53 | 3.23 | ○ | ◎ |
| 5 | A | Ni-1 | N-2 | 0.80 | 2.35 | 1.23 | 1.60 | ○ | × |
| * 6 | B | Ni-1 | N-2 | 0.88 | 1.3 | 1.23 | 1.60 | ○ | ○ |
| 7 | B | Ni-2 | N-3 | 1.41 | 1.9 | 1.96 | 2.55 | ○ | ◎ |
| 8 | A | Ni-3 | N-4 | 3.18 | 4.35 | 4.42 | 5.75 | ○ | ◎ |
| 9 | A | Mn-1 | N-2 | 0.80 | 2.05 | 1.09 | 1.42 | ○ | × |
| * 10 | B | Mn-1 | N-2 | 0.88 | 1.30 | 1.09 | 1.42 | ○ | ○ |
| * 11 | A | Mn-2 | N-5 | 4.10 | 5.25 | 5.06 | 6.58 | ○ | ○ |
| 12 | B | Mn-2 | N-5 | 4.10 | 4.50 | 5.06 | 5.58 | ○ | ◎ |
| 13 | A | Mn-3 | N-6 | 5.45 | 6.65 | 6.72 | 0.74 | ○ | ◎ |
| * 14 | A | Ni/Mn-1 | N-4 | 3.17 | 4.35 | 4.11 | 5.34 | ○ | ◎ |
| * 15 | A | Ni/Mn-2 | N-7 | 3.52 | 4.75 | 4.69 | 6.10 | ○ | ○ |
| 16 | A | Ni/Mn-3 | N-8 | 3.87 | 5.05 | 5.26 | 6.84 | ○ | ◎ |
| 17 | B | Ni/Mn-1 | N-4 | 3.17 | 3.60 | 4.11 | 5.34 | ○ | ◎ |
| 18 | B | Mn-2 | N-7 | 4.10 | 4.00 | 5.06 | 6.58 | × | - |
| * 19 | B | Mn-2 | N-6 | 4.10 | 5.90 | 5.06 | 6.58 | ○ | ○ |
| 20 | A | Mn-2 | N-6 | 4.10 | 6.65 | 5.06 | 6.58 | ○ | × |
| 21 | C | Co-3 | N-3 | 3.18 | 2.29 | 5.70 | 7.41 | × | - |

| No. | Separator | Positive electrode | Negative electrode | QprWp mAh/cm$^2$ | qm+QnWn mAh/cm$^2$ | QpWp mAh/cm$^2$ | 1.3QpWp mAh/cm$^2$ | Evaluation 1 | Evaluation 2 |
|---|---|---|---|---|---|---|---|---|---|
| 22 | D | Co-3 | N-3 | 3.18 | 5.00 | 5.70 | 7.41 | ○ | ◎ |
| 23 | C | Ni-3 | N-3 | 3.18 | 2.29 | 4.42 | 6.63 | × | - |
| 24 | D | Ni-3 | N-3 | 3.18 | 5.00 | 4.42 | 6.63 | ○ | ○ |
| 25 | F | Ni-3 | N-3 | 3.18 | 3.53 | 4.42 | 6.63 | ○ | ◎ |
| 26 | A | Ni/Mn-2 | N-9 | 3.52 | 3.29 | 4.69 | 6.10 | × | - |
| 27 | E | Ni/Mn-2 | N-9 | 3.52 | 5.11 | 4.69 | 6.10 | ○ | ○ |
| 28 | F | Ni/Mn-2 | N-9 | 3.52 | 4.17 | 4.69 | 6.10 | ○ | ◎ |
| 29 | B | Co-3 | N-4 | 3.18 | 3.60 | 5.70 | 7.14 | ○ | ◎ |
| 30 | G | Co-3 | N-3 | 3.10 | - | 5.70 | 7.41 | × | × |

*Example of the present invention

Table 4 shows that the cells satisfying the condition QprWp < qm + QnWn exhibited no insufficient charging and were fully chargeable, whereas cells 18, 21, 23 and 26 which did not satisfy this condition were not capable of charging. However, even with such an electrode construction, cells 22, 24, 25, 27 and 28 were able to avoid insufficient charging by changing the separator. A satisfactory overcharge-preventing function was also exhibited by cells satisfying the condition qm + QnWn < QpWp, while cells satisfying the condition QpWp < qm + QnWn < 1.3QpWp did not exhibit a complete overcharge-preventing function but had significantly slowed decomposition of the electrolyte solution. In contrast, when qm + QnWn > 1.3QpWp, the effect of the overcharge-preventing function could not be significantly confirmed.

These results indicated that designing a cell to satisfy inequality I above will yield a cell with no insufficient charging and a satisfactory overcharge-preventing function.

Also, it is self-evident from inequality I that when QprWp ≤ QnWn, a separator with a small qm value increases the options for the positive electrode and thus facilitates the cell design, but this is also indicated by comparison between separator A and separator B.

In addition, comparison between separators A-C and separators D-F indicates that the use of a separator with a large qm value is preferred when QprWp ≥ QnWn.

Separator G is a non-porous example, and in the case of this separator, the separator resistance was too high and did not exhibit the prescribed charging terminating condition in the charging of Evaluation 1. Also, no overcharge-preventing function was exhibited in Evaluation 2. This indicates that a porous structure is essential, as represented by the Gurley value.

Industrial Applicability

As explained in detail above, a design satisfying inequality I effectively prevents overcharging and avoids insufficient charging and, therefore, allows a practical non-aqueous secondary battery to be provided which is very safe with regard to overcharging.

**Claims**

1. A non aqueous secondary battery which employs a negative electrode in which the negative electrode active material is a material capable of lithium doping/dedoping, a positive electrode in which the positive electrode active material is a lithium-containing transition metal oxide, and a non-aqueous electrolyte solution as the electrolyte solution, wherein

   (1) the battery includes a separator having an overcharge-preventing function, wherein said separator is composed of a porous film made of a porous polymer, which includes a network-like support, and swells in the electrolyte solution and retains said electrolyte solution,
   (2) said network-like support has a mean film thickness of 10-30 $\mu$m, a basis weight of 6-20 $g/m^2$, a Gurley value (JIS P8117) of no greater than 10 sec/100 cc, a McMullin number of no greater than 10 at 25°C and a (McMullin number x film thickness) product of no greater than 200 $\mu$m,
   (3) said separator has a mean film thickness of 10-35 $\mu$m, a basis weight of 10-25 $g/m^2$ and a Gurley value (JIS P8117) of no greater than 60 sec/100 cc, and
   (4) said battery satisfies the following relationships I and II:

$$QprWp < qm + QnWn < 1.3QpWp \qquad\qquad I$$

$$QpWp < qm + QnWn < 1.3\ QpWp \qquad\qquad II$$

   wherein the value of the total amount of lithium in the positive electrode active material is terms of electric charge is Qp (mAh/mg), the amount of lithium utilized for charge-discharge reaction of the lithium in the positive electrode active material in terms of electric charge is Qpr (mAh/mg), the value of the amount of lithium which can be doped in the negative electrode active material in terms of electric charge is Qn (mAh/mg), the value for the overcharge-preventing function of the separator is qm ($mAh/cm^2$), the weight of the positive electrode active material is Wp ($mg/cm^2$) and the weight of the negative electrode active material is Wn ($mg/cm^2$).

2. A battery according to claim 1, wherein

$$QprWp/QnWn = 0.7\text{-}1.05.$$

3. A battery according to claim 1, wherein said positive electrode active material is a lithium-containing transition metal oxide represented by $LiMO_2$, where M is at least one metal element selected from the group consisting of cobalt, nickel, manganese, aluminum, iron, titanium and vanadium, and at least 1/3 of the atomic ratio composition of M is cobalt or nickel.

4. A battery according to claim 1, wherein said positive electrode active material is a lithium-containing transition metal oxide represented by $LiM_2O_4$ where M is at least one metal element selected from the group consisting of manganese, magnesium, nickel, cobalt, chromium, copper, iron and boron, and at least 1/3 of the atomic ratio composition of M is manganese.

5. A battery according to claim 1, wherein said positive electrode active material is lithium nickelate ($LiNiO_2$).

6. A battery according to claim 1, wherein said positive electrode active material is lithium manganate ($LiMn_2O_4$).

7. A battery according to claim 1, wherein said positive electrode active material is composed of lithium manganate ($LiMn_2O_4$) and lithium nickelate ($LiNiO_2$).

8. A battery according to claim 1, wherein said network-like support is a nonwoven fabric.

9. A battery according to claim 8, wherein the fiber composing said nonwoven fabric is composed of at least one type of high-molecular-weight polymer selected from the group consisting of polyolefins, polyphenylene sulfide, aromatic polyamides and polyesters.

10. A battery according to claim 1, wherein said network-like support is a cloth.

11. A battery according to claim 10, wherein said network-like support is a glass cloth.

12. A battery according to any one of claims 1 to 11, wherein the overcharge-preventing function value qm of said separator is in the range of 0.1-1.5 mAh/cm$^2$.

13. A battery according to claim 12, wherein the overcharge-preventing function value qm of said separator is in the range of 0.1-1.0 mAh/cm$^2$.


**Patentansprüche**

1. Nichtwässrige Sekundärbatterie, welche eine Negativelektrode, bei der das Negativelektroden-Aktivmaterial ein Material ist, welches zur Lithium-Dotierung/-Entdotierung befähigt ist, eine Positivelektrode, bei der das Positivelektroden-Aktivmaterial ein lithiumhaltiges Übergangsmetalloxid ist, und eine nichtwässrige Elektrolytlösung als Elektrolytlösung verwendet, wobei:

   (1) die Batterie einen Separator mit einer Überladung verhindernden Funktion umfasst, wobei der Separator von einer porösen Folie aus einem porösen Polymer gebildet ist, welche einen netzartigen Träger umfasst und in der Elektrolytlösung quillt und die Elektrolytlösung zurückhält,
   (2) der netzartige Träger eine mittlere Schichtdicke von 10-30 $\mu$m, ein Flächengewicht von 6-20 g/m$^2$, einen Gurley-Wert (JIS P8117) von nicht größer als 10 s/100 cm$^3$, eine McMullin-Zahl von nicht größer als 10 bei 25 ˚C und ein (McMullin-Zahl x Schichtdicke)-Produkt von nicht größer als 200 $\mu$m aufweist,
   (3) der Separator eine mittlere Schichtdicke von 10-35 $\mu$m, ein Flächengewicht von 10-25 g/m$^2$ und einen Gurley-Wert (JIS P8117) von nicht größer als 60 s/100 cm$^3$ aufweist, und wobei
   (4) die Batterie die folgenden Beziehungen I und II erfüllt:

$$QprWp < qm + QnWn < 1,3\ QpWp \qquad\qquad I$$

$$QpWp < qm + QnWn < 1,3\ QpWp \qquad\qquad II$$

wobei der Wert der Gesamtmenge an Lithium in dem Positivelektroden-Aktivmaterial, bezogen auf die elektrische Ladung, Qp (mAh/mg) ist, wobei die Lithiummenge, welche für die Ladungs-/Entladungsreaktion des Lithiums in dem Positivelektroden-Aktivmaterial eingesetzt wird, bezogen auf die elektrische Ladung, Qpr (mAh/mg) ist, wobei der Wert der Lithiummenge, mit welcher das Negativelektroden-Aktivmaterial dotiert werden kann, bezogen auf die elektrische Ladung, Qn (mAh/mg) ist, wobei der Wert für die Überladung verhindernde Funktion des Separators qm (mAh/cm$^2$) ist, wobei das Gewicht des Positivelektroden-Aktivmaterials Wp (mg/cm$^2$) ist und wobei das Gewicht des Negativelektroden-Aktivmaterials Wn (mg/cm$^2$) ist.

2. Batterie nach Anspruch 1, wobei QprWp/QnWn = 0,7 - 1,05.

3. Batterie nach Anspruch 1, wobei das Positivelektroden-Aktivmaterial ein lithiumhaltiges Übergangsmetalloxid ist, repräsentiert durch LiMO$_2$, worin M mindestens ein Metallelement ist, ausgewählt aus der aus Cobalt, Nickel, Mangan, Aluminium, Eisen, Titan und Vanadium bestehenden Gruppe, und wobei mindestens 1/3 der Atomverhältniszusammensetzung von M Cobalt oder Nickel ist.

4. Batterie nach Anspruch 1, wobei das Positivelektroden-Aktivmaterial ein lithiumhaltiges Übergangsmetalloxid ist, repräsentiert durch LiM$_2$O$_4$, worin M mindestens ein Metallelement ist, ausgewählt aus der aus Mangan, Magnesium, Nickel, Cobalt, Chrom, Kupfer, Eisen und Bor bestehenden Gruppe, und wobei mindestens 1/3 der Atomverhältniszusammensetzung von M Mangan ist.

5. Batterie nach Anspruch 1, wobei das Positivelektroden-Aktivmaterial Lithiumnickelat (LiNiO$_2$) ist.

6. Batterie nach Anspruch 1, wobei das Positivelektroden-Aktivmaterial Lithiummanganat (LiMn$_2$O$_4$) ist.

7. Batterie nach Anspruch 1, wobei das Positivelektroden-Aktivmaterial aus Lithiummanganat (LiMn$_2$O$_4$) und Lithiumnickelat (LiNiO$_2$) gebildet ist.

8. Batterie nach Anspruch 1, wobei der netzartige Träger ein Nonwoven-Textil ist.

9. Batterie nach Anspruch 8, wobei die das Nonwoven-Textil bildende Faser von mindestens einem Typ von Polymer mit hohem Molekulargewicht gebildet ist, ausgewählt aus der aus Polyolefinen, Polyphenylensulfid, aromatischen Polyamiden und Polyestern gebildeten Gruppe.

10. Batterie nach Anspruch 1, wobei der netzartige Träger ein Gewebe ist.

11. Batterie nach Anspruch 10, wobei der netzartige Träger ein Glasgewebe ist.

12. Batterie nach einem der Ansprüche 1 bis 11, wobei der Wert qm für die Überladung verhindernde Funktion des Separators im Bereich von 0,1 - 1,5 mAh/cm$^2$ liegt.

13. Batterie nach Anspruch 12, wobei der Wert qm für die Überladung verhindernde Funktion des Separators im Bereich von 0,1 - 1,0 mAh/cm$^2$ liegt.

**Revendications**

1. Accumulateur non aqueux qui utilise une électrode négative dans laquelle le matériau actif de l'électrode négative est un matériau capable d'être dopé/dédopé au lithium, une électrode positive dans laquelle le matériau actif de l'électrode positive est un oxyde de métal de transition contenant du lithium, et une solution non aqueuse d'électrolyte en tant que solution d'électrolyte, dans lequel

(1) l'accumulateur comporte un séparateur dont une des fonctions est d'empêcher une surcharge, ledit séparateur étant composé d'un film poreux constitué d'un polymère poreux, lequel comprend un support de type réseau, gonfle dans la solution d'électrolyte et retient ladite solution d'électrolyte,

(2) ledit support de type réseau présente une épaisseur moyenne de film allant de 10 $\mu$m à 30 $\mu$m, un grammage allant de 6 g/m$^2$ à 20 g/m$^2$, une valeur de Gurley (JIS P8117) d'au plus 10 secondes/100 cc, un indice de McMullin d'au plus 10 à 25 ˚C et un produit (indice de McMullin x épaisseur de film) d'au plus 200 $\mu$m,

(3) ledit séparateur présente une épaisseur moyenne de film allant de 10 $\mu$m à 35 $\mu$m, un grammage allant de 10 g/m$^2$ à 25 g/m$^2$ et une valeur de Gurley (JIS P8117) d'au plus 60 secondes/100 cc, et

(4) ledit accumulateur satisfait les relations I et II suivantes:

$$QprWp < qm + QnWn < 1,3\ QpWp \qquad I$$

$$QpWp < qm + QnWn < 1,3\ QpWp \qquad II$$

dans lesquelles la valeur de la quantité totale de lithium dans le matériau actif de l'électrode positive en termes de charge électrique est Qp (mAh/mg), la quantité de lithium utilisée pour la réaction de chargement - déchargement du lithium dans le matériau actif de l'électrode positive en termes de charge électrique est Qpr (mAh/mg), la valeur de la quantité de lithium qui peut être dopée dans le matériau actif de l'électrode négative en termes de charge électrique est Qn (mAh/mg), la valeur pour la fonction du séparateur empêchant une surcharge est qm (mAh/cm$^2$), le poids du matériau actif de l'électrode positive est Wp (mg/cm$^2$) et le poids du matériau actif de l'électrode négative est Wn (mg/cm$^2$).

2. Accumulateur selon la revendication 1, dans lequel QprWp/QnWn = 0,7 à 1,05.

3. Accumulateur selon la revendication 1, dans lequel ledit matériau actif de l'électrode positive est un oxyde de métal de transition contenant du lithium représenté par LiMO$_2$, où M est au moins un élément métallique choisi dans le groupe constitué par le cobalt, le nickel, le manganèse, l'aluminium, le fer, le titane et le vanadium, et au moins 1/3 de la composition de M en termes de rapport atomique comprend du cobalt ou du nickel.

4. Accumulateur selon la revendication 1, dans lequel ledit matériel actif de l'électrode positive est un oxyde de métal de transition contenant du lithium représenté par LiM$_2$O$_4$, où M est au moins un élément métallique choisi dans le groupe constitué par le manganèse, le magnésium, le nickel, le cobalt, le chrome, le cuivre, le fer et le bore, et au moins 1/3 de la composition de M en termes de rapport atomique comprend du manganèse.

5. Accumulateur selon la revendication 1, dans lequel ledit matériau actif de l'électrode positive est le nickelate de lithium (LiNiO$_2$).

6. Accumulateur selon la revendication 1, dans lequel ledit matériau actif de l'électrode positive est le manganate de lithium (LiMn$_2$O$_4$).

7. Accumulateur selon la revendication 1, dans lequel ledit matériau actif de l'électrode positive est composé de manganate de lithium (LiMn$_2$O$_4$) et de nickelate de lithium (LiNiO$_2$).

8. Accumulateur selon la revendication 1, dans lequel ledit support de type réseau est un tissu non tissé.

9. Accumulateur selon la revendication 8, dans lequel la fibre composant ledit tissu non tissé est composée d'au moins un type de polymère de poids moléculaire élevé choisi dans le groupe constitué par les polyoléfines, un poly(sulfure de phénylène), les polyamides aromatiques et les polyesters.

10. Accumulateur selon la revendication 1, dans lequel ledit support de type réseau est un tissu.

11. Accumulateur selon la revendication 10, dans lequel ledit support de type réseau est un tissu de verre.

12. Accumulateur selon l'une quelconque des revendications 1 à 11, dans lequel la valeur qm de la fonction empêchant une surcharge dudit séparateur est située dans la plage allant de 0,1 mAh/cm$^2$ à 1,5 mAh/cm$^2$.

13. Accumulateur selon la revendication 12, dans lequel la valeur qm de la fonction empêchant une surcharge dudit séparateur est située dans la plage allant de 0,1 mAh/cm$^2$ à 1,0 mAh/cm$^2$.

# Fig.1

# Fig.2

# Fig.3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0122519 A
- WO 0167536 A

- JP 2002042867 A